# EUROPEAN PATENT APPLICATION

(11) **EP 4 835 534 A2**
(43) Date of publication of application: **04.11.2026**
(21) Application number: 25201211.7
(22) Date of filing: 13.11.2024
(51) Int. Cl.: G02B 6/46

(54) **A METHOD OF DEPLOYING AN OPTICAL FIBRE CABLE IN A TELECOMMUNICATIONS NETWORK**

(30) Priority: 20.12.2023 EP 23218513
(62) Document number(s) of the earlier application(s) in accordance with Art. 76 EPC: 24804555.1 / 4 829 600
(71) Applicant: British Telecommunications Public Limited Company, London E1 8EE (GB)
(72) Inventor: NOVAKOVIC, Violeta, London, E1 8EE (GB); MORSMAN, Trevor, London, E1 8EE (GB); HUBERT, Malcolm, London, E1 8EE (GB)
(74) Representative: British Telecommunications public limited company Intellectual Property Department

(57) **Abstract**

This invention provides a method of deploying an optical fibre cable in a telecommunications network, the optical fibre cable being configured to connect a first optical fibre interface unit in the telecommunications network and a second optical fibre interface unit in a dwelling, the method comprising the steps of: positioning an optical fibre subduct connector on an optical fibre duct so as to align an aperture in the optical fibre subduct connector with an aperture in the optical fibre duct; connecting an optical fibre subduct with an optical fibre subduct connection interface of the optical fibre subduct connector such that any overlap of the optical fibre subduct and optical fibre subduct connection interface extends up to and not exceeding the aperture of the optical fibre duct, the optical fibre subduct connection interface being configured to resist disconnection of the optical fibre subduct and optical fibre subduct connection interface; rotating the optical fibre subduct connection interface such that a major axis of the first section of the optical fibre subduct connection interface is offset to the major axis of the optical fibre duct; and deploying an optical fibre cable between the first optical fibre interface unit in the telecommunications network and the second optical fibre interface unit in the dwelling by routing the optical fibre cable through optical fibre duct, the optical fibre subduct connector, and the optical fibre subduct.

## Description

### Field of the Invention

The present invention relates to a method of deploying an optical fibre cable in a telecommunications network.

### Background

A telecommunications network operator may provide a new optical fibre connection to a dwelling, such as a single dwelling unit, a multi-dwelling unit or a commercial unit. In many telecommunications networks, an underground duct that passes multiple dwellings provides a protective path for new and existing telecommunications connections between a telecommunications network operator and one or more dwellings passed by the duct. This underground duct may be referred to as a "main duct" and often runs along a footpath or road connecting the dwellings. A new optical fibre connection for each dwelling passed by the main duct may then be deployed by running an optical fibre cable from the dwelling to the main duct and then running the optical fibre cable along the main duct to an optical fibre interface unit (e.g. a Connectorised Block Terminal (CBT) in a footway box). The optical fibre cable run from the dwelling to the main duct must also be deployed within a duct to provide protection to the optical fibre cable between the dwelling and main duct. Typically a subduct, having a diameter less than the diameter of the main duct, is used.

A conventional method of deploying a new optical fibre connection to a dwelling will now be described. This method will be described in a scenario where a main duct passing the dwelling already exists. For alternative scenarios, a main duct would also need to be deployed. To deploy the new optical fibre connection, a subduct trench is excavated between the dwelling and the main duct. A section of the main duct is removed, such as by drilling a hole that is sufficiently wide to allow passage of the subduct through the hole. The subduct is then extended in the trench from the dwelling to the main duct, passed through the hole in the main duct, and run along the main duct to the optical fibre interface unit. The trench and any excavation work at the main duct are then reinstated. The new optical fibre cable may then be run through the subduct from the dwelling to the optical fibre interface unit.

### Summary of the Invention

According to a first aspect of the invention, there is provided a method of deploying an optical fibre cable in a telecommunications network, the optical fibre cable being configured to connect a first optical fibre interface unit in the telecommunications network and a second optical fibre interface unit in a dwelling, the method comprising the steps of: positioning an optical fibre subduct connector on an optical fibre duct so as to align an aperture in the optical fibre subduct connector with an aperture in the optical fibre duct; connecting an optical fibre subduct with an optical fibre subduct connection interface of the optical fibre subduct connector such that any overlap of the optical fibre subduct and optical fibre subduct connection interface extends up to and not exceeding the aperture of the optical fibre duct, the optical fibre subduct connection interface being configured to resist disconnection of the optical fibre subduct and optical fibre subduct connection interface; rotating the optical fibre subduct connection interface such that a major axis of the first section of the optical fibre subduct connection interface is offset to the major axis of the optical fibre duct; and deploying an optical fibre cable between the first optical fibre interface unit in the telecommunications network and the second optical fibre interface unit in the dwelling by routing the optical fibre cable through optical fibre duct, the optical fibre subduct connector, and the optical fibre subduct.

The optical fibre subduct connection interface may comprise a first section and a second section and the optical fibre subduct and the optical fibre subduct connection interface are connected such that, once the optical fibre subduct connector is positioned on the optical fibre duct, in the second section, an angle between a major axis of the optical fibre duct, and a line extending from a central point of the aperture of the optical fibre subduct connector, and a central point of a junction between the first and second sections of the optical fibre subduct connection interface, is less than 45 degrees.

In the first section, the optical fibre subduct and optical fibre duct may be parallel or substantially parallel.

The optical fibre subduct may be connected with the optical fibre subduct connection interface by one of a group comprising: inserting the optical fibre subduct into the optical fibre subduct connection interface such that the overlap of the optical fibre subduct and optical fibre subduct connection interface extends up to and not exceeding the aperture of the optical fibre duct; inserting the optical fibre subduct connection interface into the optical fibre subduct such that the overlap of the optical fibre subduct and optical fibre subduct connection interface extends up to and not exceeding the aperture of the optical fibre duct; and coupling the optical fibre subduct and optical fibre subduct connection interface such that there is no overlap of the optical fibre subduct and optical fibre subduct connection interface.

The method may further comprise the step of fastening the optical fibre subduct connector with the optical fibre duct.

The method may further comprise the step of conforming an inner surface of the optical fibre subduct connector to an outer surface of the optical fibre duct.

The method may further comprise the step of excavating material surrounding the optical fibre duct to enable positioning of the optical fibre subduct connector on the optical fibre duct. The material may be excavated to enable positioning of the optical fibre subduct connector on a top section or a side section of the optical fibre duct.

The method may further comprise the step of excavating an optical fibre subduct trench between the dwelling and the optical fibre duct.

The method may further comprise the step of extending the subduct along the subduct trench between the dwelling and the optical fibre duct.

The method may further comprise the step of reinstating the excavation such that an open end of the subduct is exposed at the dwelling.

The method may further comprise the step of creating the aperture in the optical fibre duct.

According to a second aspect of the invention, there is provided an optical fibre subduct connector for deploying an optical fibre cable in a telecommunications network, the optical fibre subduct connector comprising: a body defining an aperture for alignment with an aperture of an optical fibre duct when the optical fibre subduct connector is positioned on the optical fibre duct; an optical fibre subduct connection interface for connecting to an optical fibre subduct such that any overlap of the optical fibre subduct and optical fibre subduct connection interface extends up to and not exceeding the aperture of the optical fibre duct, the optical fibre subduct connection interface being configured to: resist disconnection of the optical fibre subduct and optical fibre subduct connection interface, and rotate such that a major axis of the first section of the optical fibre subduct connection interface is offset to the major axis of the optical fibre duct, wherein the optical fibre duct, optical fibre subduct and optical fibre subduct connector provide a route for deploying the optical fibre cable between the first optical fibre interface unit in the telecommunications network and the second optical fibre interface unit in the dwelling.

The optical fibre subduct connection interface may comprise a first section and a second section and the optical fibre subduct and the optical fibre subduct connection interface are connected such that, once the optical fibre subduct connector is positioned on the optical fibre duct, in the second section, an angle between a major axis of the optical fibre duct, and a line extending from a central point of the aperture of the optical fibre subduct connector, and a central point of a junction between the first and second sections of the optical fibre subduct connection interface, is less than 45 degrees.

In the first section, the optical fibre subduct and optical fibre duct may be parallel or substantially parallel.

### Brief Description of the Figures

In order that the present invention may be better understood, embodiments thereof will now be described, by way of example only, with reference to the accompanying drawings in which:
Figure 1 is a schematic view of a telecommunications network;
Figure 2 is a side view of a subduct connector;
Figure 3 is a top view of the subduct connector;
Figure 4 is a transparent side view of the subduct connector;
Figure 5 is a transparent top view of the subduct connector;
Figure 6 is a flow diagram of a method of deploying an optical fibre cable in the telecommunications network;
Figure 7 is a schematic view of the subduct connector positioned on a main duct;
Figure 8 is a schematic view of the subduct connector positioned on the main duct, illustrating a subduct inserted into the subduct connector;
Figure 9 is a schematic view of the subduct connector positioned on the main duct, illustrating the subduct inserted into the subduct connector and a section of the optical fibre cable extending through the subduct;
Figure 10 is a transparent schematic view of the subduct connector positioned on the main duct, illustrating the subduct inserted into the subduct connector and a section of the optical fibre cable extending through the subduct;
Figure 11 is a front perspective view of a further example of a subduct connector;
Figure 12 is a top view of the subduct connector of Figure 11; and
Figure 13 is a rear perspective view of the subduct connector of Figure 12.

### Detailed Description

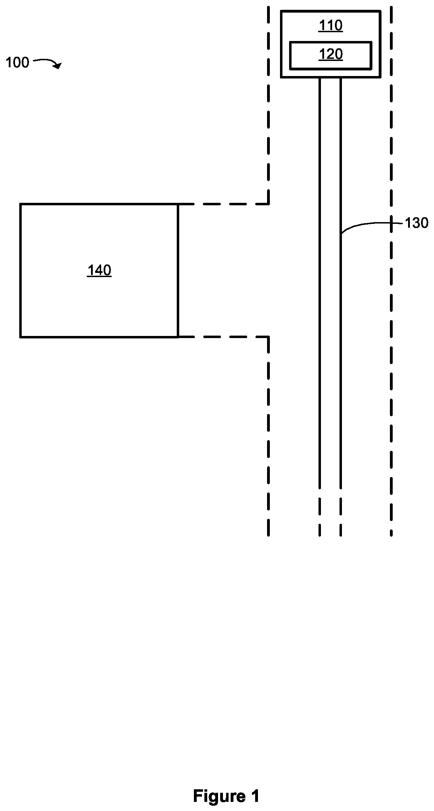

Figure 1 illustrates a telecommunications network 100 comprising a footway box 110, a Connectorised Block Terminal (CBT) 120, a main duct 130, and a dwelling 140. The dashed line represents a ground level boundary, such as the boundary of a footpath. The main duct 130 is an underground duct that extends underneath the footpath from the CBT 120 to the dwelling 140 and provides a protective path for new and existing telecommunications connections between the CBT 120 and dwelling 140. The main duct 120 may extend beyond the CBT 120 and/or extend beyond the dwelling 140, for example to provide a protective path for new and existing telecommunications connections to any other dwelling passed by the main duct 130 with the CBT 120 or any other node in the telecommunications network 100.

The main duct 130 has a hollow cylindrical shape defining a cavity, an inner surface and an outer surface. Common diameters for the main duct 130 include 56mm and 96.5mm, but these options are non-essential and ducting of different diameters may be used instead. The cavity of the main duct 130 may be empty or may contain one or more cables and/or one or more subducts (which may extend from the CBT 120 and/or other node of the telecommunications network 100 to the dwelling 140 and/or one or more other dwellings passed by the main duct 130).

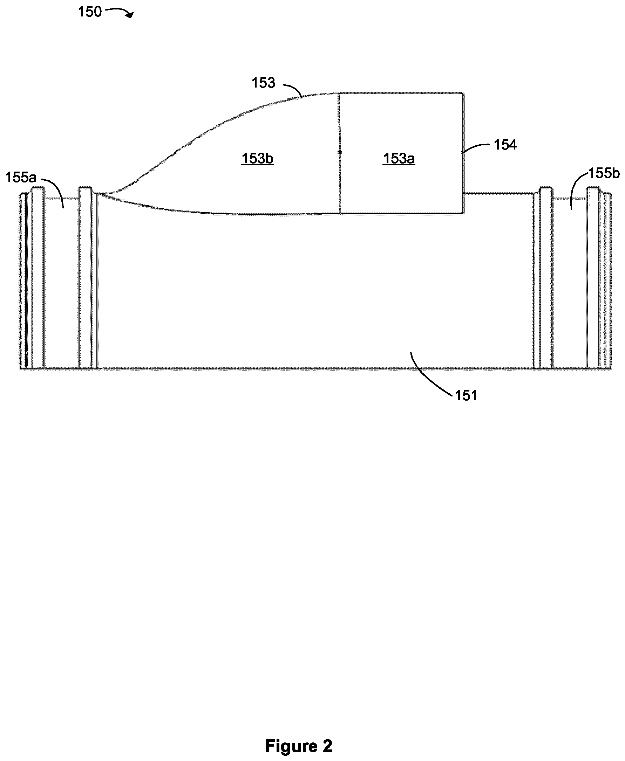

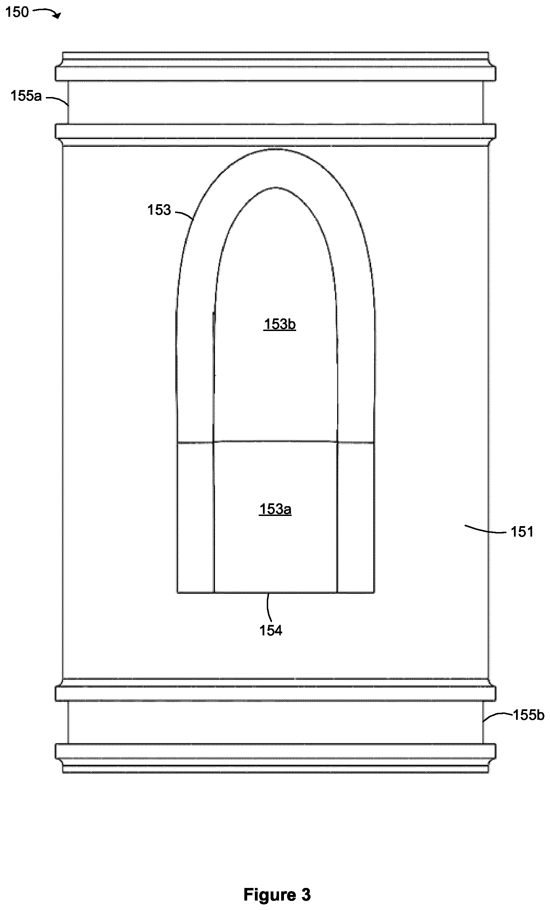

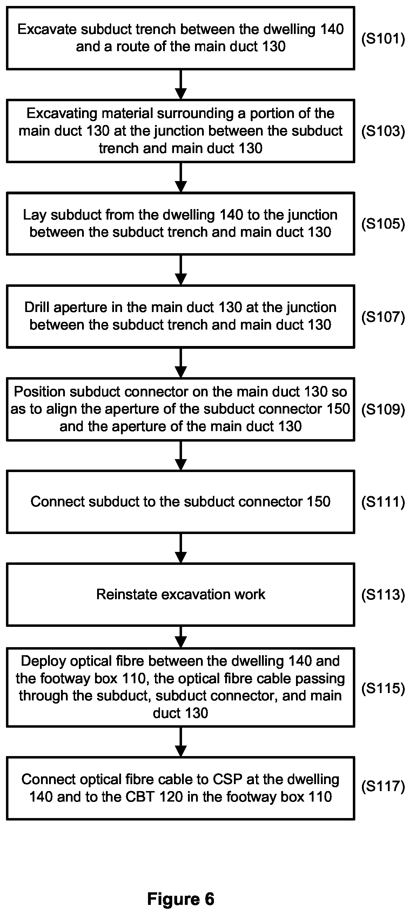

Figures 2 and 3 illustrate a subduct connector 150. As described in more detail in the method of Figure 6, the subduct connector 150 may be used to facilitate deployment of a new optical fibre cable to the dwelling 140. Figure 2 is a side view of the subduct connector 150 and Figure 3 is a top view of the subduct connector 150. Figures 2 and 3 illustrate a body 151, a port 153, and slots 155a, 155b. The body 151 has a hollow cylindrical sectional shape defining an outer curved surface and an inner curved surface (being parallel or substantially parallel to the outer curved surface). The curvature of the inner curved surface of the body 151 is shaped to be the same or similar to the curvature of the main duct 130. The body 151 is therefore shaped and dimensioned such that it can be positioned on the main duct 130 and generally conform to the outer surface of the main duct 130.

A first slot 155a and second slot 155b are provided at opposing ends of the body 151 of the subduct connector 150. These slots 155a, 155b enable or at least facilitate fastening of the subduct connector 150 to the main duct 130, such as by use of cable ties (also known as zip ties) wrapped around the main duct 130 and subduct connector 150 (each cable tie passing through a respective slot 155a, 155b).

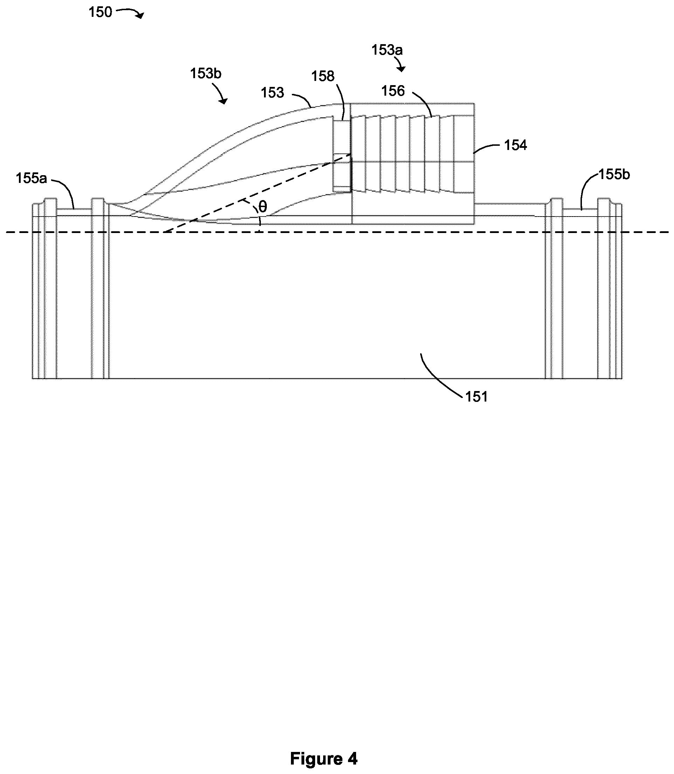

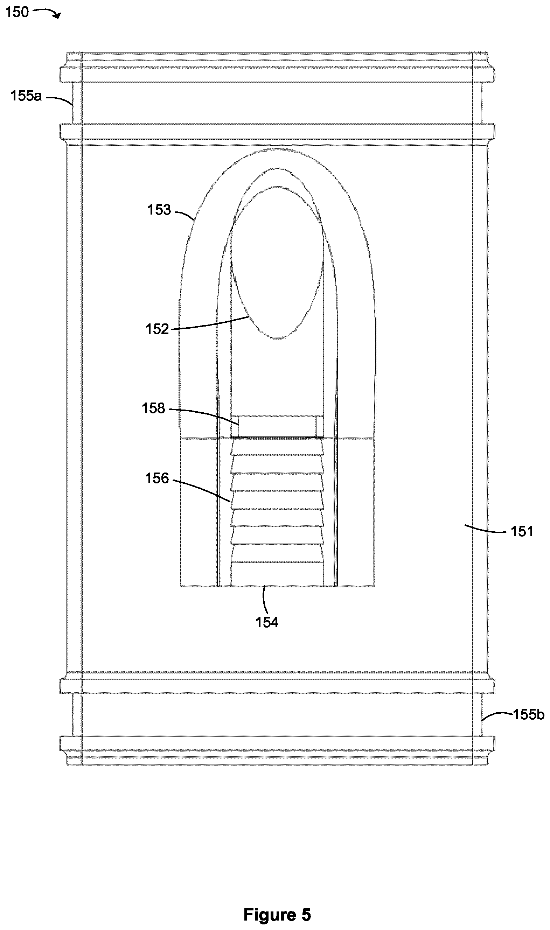

The port 153 is shown in more detail in Figures 4 and 5. Figure 4 is a transparent side view of the subduct connector 150 and Figure 5 is a transparent top view of the subduct connector 150. The port 153 extends from the outer curved surface of the body 151 to a port opening 154. The junction between the port 153 and the body 151 includes an aperture 152 (shown in Figure 5) such that the port 153 defines an open cavity (that is, open at both ends) extending from the aperture 152 to the port opening 154. This cavity allows passage of an optical fibre cable from the port opening 154, via the aperture, to an inner region of the body 151 (that is, a region that is partially enclosed by the inner curved surface of the body 151). The cavity, aperture 152 and port opening 154 are therefore wider than the optical fibre cable.

Figures 4 and 5 also illustrate a section of the cavity adjacent the port opening 154 having a barbed inner surface 156 and a narrowed segment 158. The barbed inner surface 156 is designed to apply a frictional force to another object inserted into the port 153. The cavity is shaped and dimensioned such that the barbed inner surface 156 has a diameter that is the same or substantially similar to the diameter of a subduct used in deploying the optical fibre cable to the dwelling. The subduct may therefore be inserted into the port 153 at the port opening 154 and the barbed inner surface 156 applies a frictional force to the subduct. This prevents or at least resists motion (e.g. removal) of the subduct once inserted into the port 153 (that is, the frictional force resists relative motion between the subduct and subduct connector 150). The barbs of the barbed inner surface 156 are configured such that the frictional force applied to the subduct on insertion is less than the frictional force applied to the subduct on removal. This configuration may be based on the geometry or a surface property of the barbs.

The narrowed segment 158 of the port 153 has a diameter that is less than the diameter of the subduct but greater than the diameter of the optical fibre cable to be deployed. The subduct may therefore only be inserted into the port 153 up to the narrowed segment 158, at which point the subduct abuts the narrowed segment 158 and is prevented from further insertion. Although the narrowed segment 158 is illustrated as being provided at the end of the barbed inner surface 156, it may instead be provided at any point along the length of the cavity so as to prevent the subduct being inserted beyond the aperture 152 at the junction between the port 153 and body 151. For example, the narrowed segment 158 may be adjacent the aperture 152 at the junction between the port 153 and the body 151.

As shown in the side view of the subduct connector 150 in Figures 2 and 4, the port 153 may be defined as having two sections - a first section 153a having a major axis that is parallel or substantially parallel to a major axis of the main body 151, and a second section 153b having a curved shape to join the first section 153a and the main body 151. The shape of the second section 153b is a shallow curve such that a bend radius of an optical fibre cable extending from port opening 154, through the aperture, and along a path parallel to the major axis of the body 151 (extending to the left of Figures 2 and 4) is minimised or at least satisfying a minimum bend radius of the optical fibre cable to be deployed by a particular margin. This curve may be defined as the angle (identified in Figure 4 as θ) between 1) a line extending from a central point of the aperture 152 and a central point of a junction between the first and second sections 153a, 153b of the port 153, and 2) a major axis of the body 151 (or a line parallel to this major axis, as shown in Figure 4). This angle may be less than 45 degrees. The benefits of the shape of the port 153 are described in more detail below in the context of the method of deploying an optical fibre cable to the dwelling 140.

A method of deploying a new optical fibre cable to the dwelling 140 will now be described with reference to the flow diagram of Figure 6. The new optical fibre cable will, once deployed, extend between the CBT 120 in the footway box 110 and a Customer Splice Point (CSP) at the dwelling 140. This method is based on the telecommunications network 100 of Figure 1 such that a main duct 130 extends from the footway box 110 and passes the dwelling 140. In alternative scenarios, one or more of the footway box 110, CBT 120 and main duct 130 are installed prior to the method of Figure 6.

In step S101, a subduct trench is excavated from the dwelling 140 to a route of the main duct 130, such that the subduct trench forms a junction with the main duct 130. The subduct trench is suitably wide to accommodate the subduct, such as a 12mm, 14mm or 16mm subduct as supplied by Gabacom^{™} or Speedpipe^{™}.

In step S103, a portion of the main duct 130 at the junction between the subduct trench and main duct 130 is exposed from its underground position by excavating its surrounding materials.

In step S105, a subduct, such as a 12mm, 14mm or 16mm subduct as supplied by Gabacom^{™} or Speedpipe^{™}, is laid in the subduct trench from the dwelling 140 to the junction between the subduct trench and main duct 130.

In step S107, an aperture is drilled into the main duct 120 at the junction between the subduct trench and main duct 130. The aperture is suitably wide to allow passage of an optical fibre cable and may be the same width as the aperture of the subduct connector 150. This aperture in the main duct 130 determines the position of the subduct connector 150. This aperture may be drilled into a top section of the main duct 130 or a side section of the main duct 130. That is, the main duct 130 may be defined by a top section, bottom section and two opposing side sections between the top and bottom sections, wherein the top section faces upwards (i.e. away from the ground when the main duct 130 is deployed) and the bottom section faces downwards (i.e. towards the ground when the main duct 130 is deployed).

In step S109, the subduct connector 150 is positioned on the main duct 130 such that the aperture 152 of the subduct connector 150 aligns with the aperture drilled into the main duct 130 in step S107. Once positioned, the subduct connector 150 is fastened to the main duct 130 by tightening a first and second cable tie around the subduct connector 150 and main duct 130, the first and second cable ties respectively passing through first and second slots 155a, 155b of the subduct connector 150 to ensure the cable ties do not slip once tightened.

In step S111, the subduct is connected to the subduct connector 150 by inserting the subduct into the port opening 154 of the port 153 of the subduct connector 150. The barbed inner surface 156 of the port 153 acts as a frictional surface so as to exert a frictional force on the subduct upon insertion into the port 153. The subduct is preferably inserted into the port 153 in such a way (e.g. by being inserted a particular distance) such that the frictional force exerted by the barbed inner surface 156 is above a threshold such that removal of the subduct via a pulling force is prevented or at least substantially resisted. In this example, the subduct is inserted into the port 153 until it abuts the narrowed segment 158. The subduct is therefore inserted a distance up to and not exceeding the aperture drilled into the main duct 130, such that the subduct does not extend into the main duct 130.

In step S113, the excavation work of steps S101 and S103 (to excavate the subduct trench and the materials surrounding the portion of the main duct 130 at the junction between the subduct trench and main duct 130) are reinstated. An open end of the subduct (that is, the opposing end of the subduct to the end connected to the subduct connector 150 in step S111) is exposed at the dwelling 140 during the reinstatement (i.e. it protrudes from the reinstated ground or another access method is introduced as part of the reinstatement).

In step S115, an optical fibre cable is deployed between the dwelling 140 and the footway box 110. In this example, the optical fibre cable is inserted into the subduct at its exposed open end at the dwelling 140 and run (e.g. by rodding) along the subduct into the subduct connector 150, through the aperture 152 of the subduct connector 150, through the aperture drilled into the main duct 130, and along the main duct 130 to the footway box 110. In this example, the optical fibre cable is a ROC^{™} Drop Dielectric Cable with FastAccess^{®} Technology 1 F, SMF-28^{®} Ultra fiber, Single-mode (OS2) as supplied by Corning^{™}.

In step S117, the optical fibre cable is connected at a first end to the CSP at the dwelling 140 and at a second end to the CBT 120 in the footway box 110.

The method of Figure 6 and its use of the subduct connector 150 provide an improved method of deploying an optical fibre cable. That is, in the method of Figure 6, the subduct is only inserted into the subduct connector 150 and does not extend into the main duct 130. Instead, only the optical fibre cable (following deployment in step S115) extends into and along the main duct 130. In contrast, as described in the Background section, a conventional optical fibre cable deployment method involved the subduct being inserted into the main duct 130. As the subduct has a larger diameter than the optical fibre cable, then the method of Figure 6 results in less congestion of the main duct 130 than the conventional method.

A further benefit of the method of Figure 6 is that less subduct is required in the deployment of the optical fibre cable, thereby improving material efficiency and reducing cost.

There are also multiple benefits to the method of Figure 6 due to the use of the subduct connector 150 having a port 153 comprising a parallel first section 153a and a shallow curved second section 153b. Firstly, the shallow angle at which the optical fibre cable enters the main duct 130 by virtue of the shallow curve of the second section 153b of the port 153 results in less congestion in the main duct 130. That is, if the optical fibre cable entered at a more perpendicular angle (relative to the major axis of the main duct 130), then the optical fibre cable would require more space of the main duct 130 to bend and align with the major axis of the main duct 130 without breaching its minimum bend radius. Therefore, by entering the main duct 130 at a shallow angle, the optical fibre cable may use less space of the main duct 130 and therefore reduce congestion.

A further benefit of the shape of the port 153 is that the width of the subduct connector 150 is reduced relative to an alternative design in which the port 153 extends at a more perpendicular angle relative to the major axis of the main duct 130. Less excavation work is therefore required at the junction between the subduct trench and main duct 130 (where the subduct connector 150 is positioned on the main duct 130) to accommodate the relatively thin subduct connector 150.

It is often a requirement that the subduct is laid at or below a certain depth below ground level. The reduced width of the subduct connector 150, and the shape of the port 153, enables the subduct connector 150 to be positioned on a top section of the main duct 130 (instead of being positioned on a side section of the main duct 130) for a greater range of main duct depths whilst still complying with this minimum subduct depth requirement. That is, the depth of the subduct, when connected to the main duct 130 via the subduct connector 150 positioned on top of the main duct 130, is a function of 1) the depth of the main duct 130 and 2) the width of the subduct connector 150. The main duct 130 may therefore be less deep and the subduct still comply with the minimum subduct depth requirement when using a top-positioned subduct connector 150 relative to an alternative scenario in which a subduct connector utilises a port that extends at a more perpendicular angle relative to the major axis of the main duct 130.

A further benefit of the shape of the port 153 is that the forces experienced by the port 153 as the ground is reinstated around the subduct connector 150 are less than the alternative design in which the port 153 extends at a more perpendicular angle relative to the major axis of the main duct 130. This reduces the chances of the subduct connector 150 breaking (in particular, the port 153 breaking) as the ground is compacted during reinstatement.

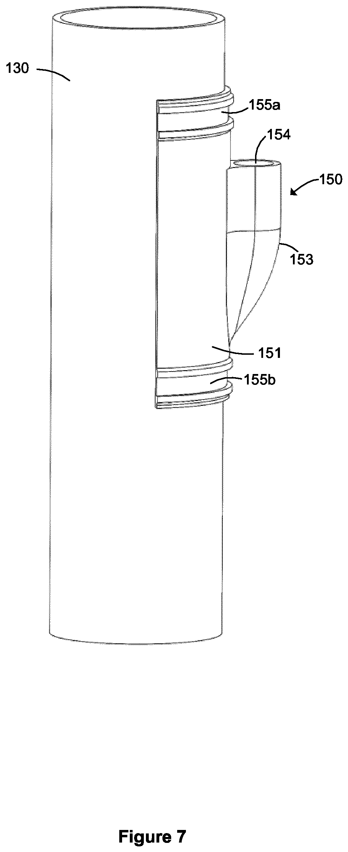

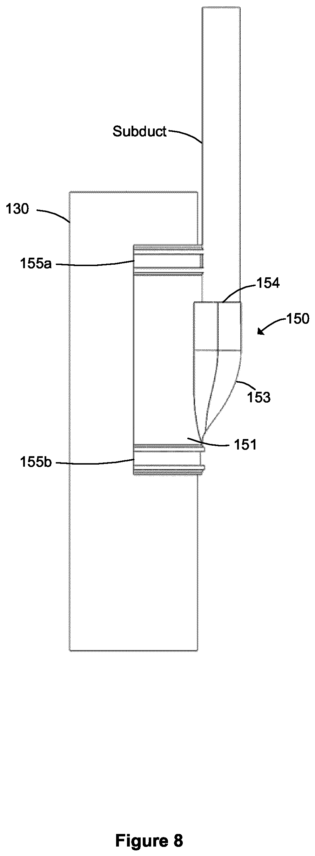

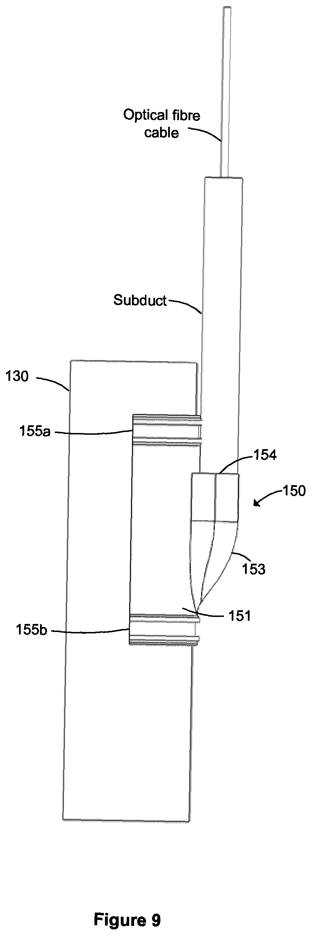

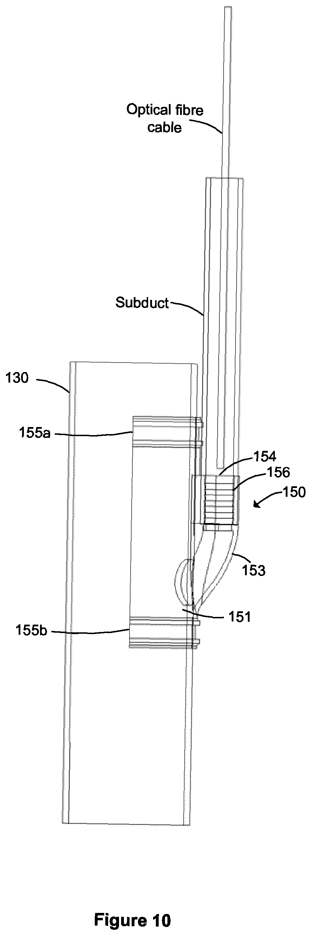

Figure 7 is a perspective view of the subduct connector 150 positioned on a portion of the main duct 130. Figure 8 illustrates the subduct connector 150 positioned on the portion of the main duct 130 with a subduct inserted into the port 153 of the subduct. Figures 9 and 10 illustrate the subduct connector 150 positioned on the portion of the main duct 130 with the subduct inserted into the port 153 of the subduct and with an optical fibre cable partially inserted into the subduct (Figure 10 being a transparent version of Figure 9).

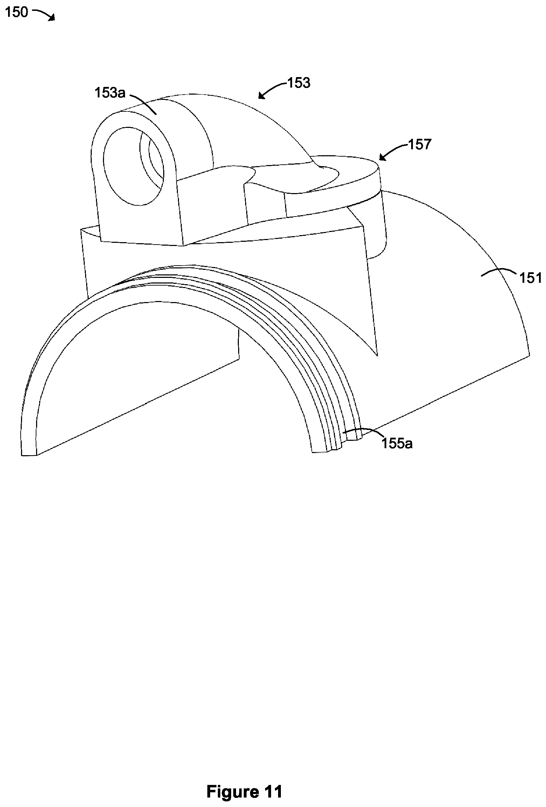

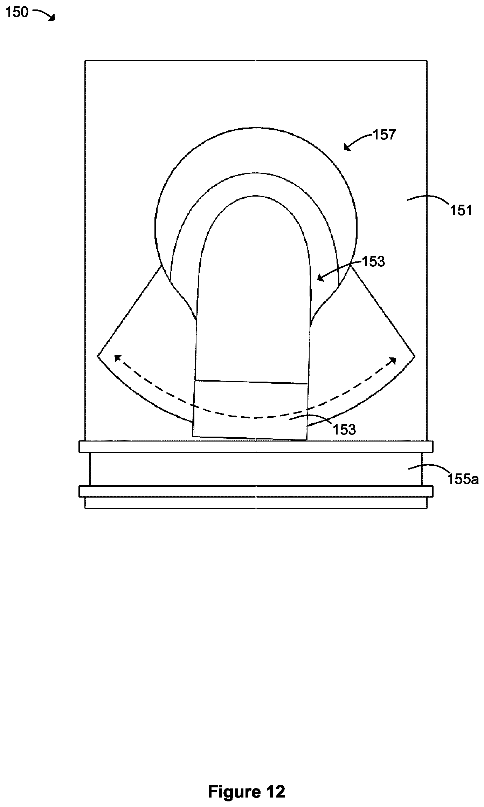

Figures 11 to 13 illustrate a further example of a subduct connector 150 (the same reference numerals will be used for this further example, where appropriate). As shown in the perspective view of Figure 11, a swivel mechanism 157 may be provided between the body 151 and port 153 of the subduct connector 150. The swivel mechanism 157 enables the port 153 to rotate on a normal axis to the body 151 of the subduct connector 150. In other words, the swivel mechanism 157 enables a variable angle between a major axis of the first section 153a of the port 153 (and therefore a major axis of the subduct when connected to the port 153) and a major axis of the main duct 130 when the subduct connector 150 is fastened to the main duct 130. This variable angle is shown as the dotted-line arrow in Figure 12. The maximum variation in this angle may be limited by the swivel mechanism 157 to prevent the bend radius of an optical fibre deployed within the subduct exceeding its minimum bend radius. The swivel mechanism 157 may be provided in two parts that are secured together during manufacture.

The method of Figure 6 may therefore comprise an additional step of rotating the port 153 (and subduct, if already connected to the port 153) relative to the body 151 of the subduct connector 150 (and therefore relative to the main duct 130 if the subduct connector 150 is already fastened to the main duct 130).

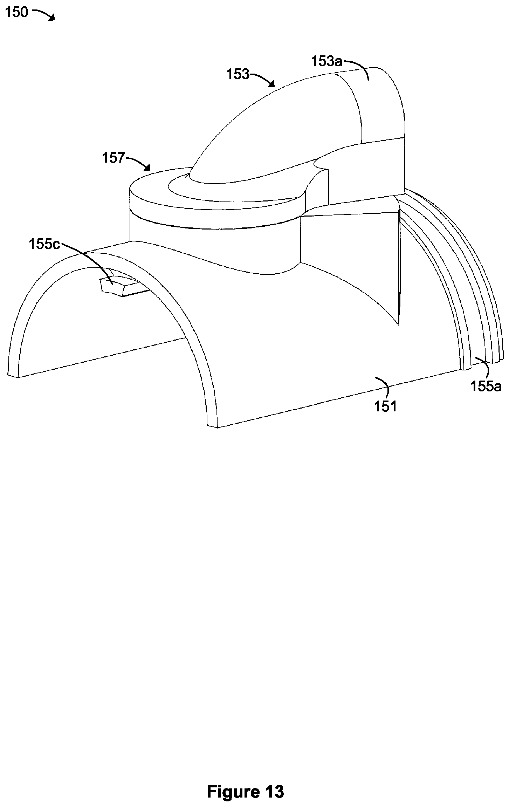

Figure 13 illustrates a rear perspective view of the further example of the subduct connector 150, illustrating a first slot 155a and a clip 155c. The clip 155c engages with the main duct 130 (such that the main duct 130 is held between the clip 155c and body 151 of the subduct connector 150). The first slot 155a is fastened to the main duct 120 in the same manner as described above (e.g. by a cable-tie).

The skilled person will understand that the shape and dimensions of the main duct 130, subduct connector 150, and subduct are non-essential. Whilst many forms of ducting are provided as circular right cylinders, the skilled person will understand that any form of elongate hollow solid having at least one open face may be used for the main duct 130 and subduct. The subduct connector 150 may therefore be provided in many corresponding forms to accommodate these different forms of ducting. That is, for a given shape of main duct, the subduct connector 150 may be shaped and dimensioned such that the inner surface of the body 151 of the subduct connector 150 conforms to the outer surface of the main duct. Furthermore, the body 151 of the subduct connector 150 may be manufactured from a flexible material to enable to the body 151 to conform to ducting of different shapes and dimensions. The port 153 of the subduct connector 150, and preferably the barbed inner surface 156, should also be shaped and dimensioned to match the form of the subduct so as to apply a frictional force to the subduct upon insertion. The skilled person will nonetheless understand that the conformal shape of the subduct connector 150 to the main duct 130 is non-essential. It is however preferable as it facilitates fastening of the subduct connector 150 and main duct 130 and reduces any ingress (e.g. of soil or liquid) into the main duct 130 via the aperture in the main duct 130.

The skilled person will also understand that it is non-essential for the port 153 to comprise a narrowed section 158 for preventing insertion of the subduct beyond the aperture 152. Alternatively, for example, the barbed inner section 156 may be configured to provide a frictional force that is sufficient to prevent insertion of the subduct beyond the aperture 152.

The skilled person will also understand that it is non-essential that the subduct is inserted into the port 153 of the subduct connector 150 (that is, it is non-essential that the port 153 is a female connector and the subduct is a male connector). Instead, the port 153 may have a smaller diameter than the subduct (but have a diameter greater than the optical fibre cable) and be inserted into the subduct (such that the port 153 is the male connector and the subduct is the female connector). Thus, in general terms, the port 153 may be considered a connector interface of either male or female form. In the male form, the fastener (e.g. barbs) may be on the outer surface of the port 153. Furthermore, the port 143 may be connected to the subduct without any overlap along their respective major axes, but instead may be connected by a coupler, such as a pneumatic or push-fit coupler. Thus, in even more general terms, the port 153 may be considered a subduct connector interface that is configured to connect the subduct connector 150 and subduct in such a way that the subduct does not extend into the main duct 130, such as by ensuring that any overlap of the connected subduct and subduct connection interface is such that the subduct extends up to and not exceeding the aperture of the main duct 130. This overlap may extend up to and not exceeding any point between the aperture of the main duct 130 and the port opening 154, such as the aperture 152 of the port 153. It is also non-essential, therefore, that the subduct connector interface includes a barbed surface and any configuration for resisting disconnection of the subduct and subduct connection interface may be used (such as by implementing the subduct connection interface as a coupler).

The skilled person will also understand that the use of cable ties to fasten the subduct connector 150 to the main duct 130 is non-essential. An alternative, such as rope, string, hook-and-loop fastener, or tape, may be used. Furthermore, one or more other forms of fastener may be used alternatively or in addition to the cable ties (such that the provision of slots 155 on the subduct connector 150 is also non-essential). Fastening the subduct connector 150 to the main duct 130 may be achieved by adhesive (e.g. Loctite^{™} Viinyl, Fabric & Plastic Adhesive) and preferably an adhesive that forms a waterproof and flexible bond. Furthermore, the subduct connector 150 may be screwed into the main duct 130, preferably with screws of a suitable length such that they do not protrude into the main duct 130 and cause congestion and/or damage. The skilled person will also understand that the step of fastening the subduct connector 150 to the main duct 130 may be skipped, for example, if the subduct connector 150 is positioned on the main duct 130 and then the ground reinstated such that the reinstated ground holds the subduct connector 150 in place.

In the method of Figure 6, the optical fibre cable being deployed was the ROC^{™} Drop Dielectric Cable with FastAccess^{®} Technology 1 F, SMF-28^{®} Ultra fiber, Single-mode (OS2) supplied by Corning^{™} (having a minimum bend radius of 60-63mm), the subduct was a 12mm, 14mm or 16mm subduct supplied by Gabacom^{™} or Speedpipe^{™}, and the main duct 130 was 56mm or 95.5mm in diameter. The skilled person will understand that these optical fibre cables, subducts and main ducts are all non-limiting, and the method of Figure 6 may be applied to deploy any form of optical fibre cable via any form of subduct via any form of main duct. Furthermore, prior to deploying the optical fibre cable, a temporary line (e.g. string) could be deployed through the subduct and main duct 130 to facilitate subsequent deployment of the optical fibre cable.

The skilled person will understand that the step of drilling the main duct 130 to create an aperture is non-essential, and that alternatively a section of main duct 130 may be removed (wherein the removed section is suitably wide to allow passage of the optical fibre cable and the region surrounding the removed section remains suitably robust to allow the subduct connector 150 to be fastened thereto). The skilled person will also understand that this step may be non-essential in the event a suitable opening already exists in the main duct 130.

The skilled person will also understand that the excavation and reinstatement steps are non-essential, such as, for example, when the optical fibre cable is being deployed during a construction phase of the dwelling.

The skilled person will also understand that the main duct 130 may not be exclusively used by the telecommunications network 100 (that is, it may be shared with other networks) and may also be used for other utilities (e.g. electrical power cables). The skilled person will also understand that the connections of the optical fibre cable (that is, to the CSP and CBT 120) are non-essential, and the optical fibre cable may be connected between any optical fibre interface unit in the telecommunications network 100 and any optical fibre interface unit at the dwelling 140.

The skilled person will also understand that the order of the steps of the method of Figure 6 is non-essential. For example, step S107 of drilling an aperture in the main duct may be performed before step S105 of laying the subduct in the subduct trench.

The invention may be defined by the following clauses:
1. A method of deploying an optical fibre cable in a telecommunications network, the optical fibre cable being configured to connect a first optical fibre interface unit in the telecommunications network and a second optical fibre interface unit in a dwelling, the method comprising the steps of:
   positioning an optical fibre subduct connector on an optical fibre duct so as to align an aperture in the optical fibre subduct connector with an aperture in the optical fibre duct;
   connecting an optical fibre subduct with an optical fibre subduct connection interface of the optical fibre subduct connector such that any overlap of the optical fibre subduct and optical fibre subduct connection interface extends up to and not exceeding the aperture of the optical fibre duct, the optical fibre subduct connection interface being configured to resist disconnection of the optical fibre subduct and optical fibre subduct connection interface, wherein the optical fibre subduct connection interface comprises a first section and a second section and the optical fibre subduct and the optical fibre subduct connection interface are connected such that, once the optical fibre subduct connector is positioned on the optical fibre duct, in the first section, the optical fibre subduct and optical fibre duct are parallel or substantially parallel and, in the second section, an angle between the optical fibre subduct and the optical fibre duct is less than 45 degrees; and
   deploying an optical fibre cable between the first optical fibre interface unit in the telecommunications network and the second optical fibre interface unit in the dwelling by routing the optical fibre cable through optical fibre duct, the optical fibre subduct connector, and the optical fibre subduct.
2. A method as defined in clause 1, wherein the optical fibre subduct is connected with the optical fibre subduct connection interface by one of a group comprising:
   inserting the optical fibre subduct into the optical fibre subduct connection interface such that the overlap of the optical fibre subduct and optical fibre subduct connection interface extends up to and not exceeding the aperture of the optical fibre duct;
   inserting the optical fibre subduct connection interface into the optical fibre subduct such that the overlap of the optical fibre subduct and optical fibre subduct connection interface extends up to and not exceeding the aperture of the optical fibre duct; and
   coupling the optical fibre subduct and optical fibre subduct connection interface such that there is no overlap of the optical fibre subduct and optical fibre subduct connection interface.
3. A method as defined in any one of the preceding clauses, further comprising the step of:
   fastening the optical fibre subduct connector with the optical fibre duct.
4. A method as defined in any one of the preceding clauses, further comprising the step of:
   conforming an inner surface of the optical fibre subduct connector to an outer surface of the optical fibre duct.
5. A method as defined in any one of the preceding clauses, further comprising the step of:
   excavating material surrounding the optical fibre duct to enable positioning of the optical fibre subduct connector on the optical fibre duct.
6. A method as defined in clause 5, wherein material is excavated to enable positioning of the optical fibre subduct connector on a top section of the optical fibre duct.
7. A method as defined in clause 5, wherein material is excavated to enable positioning of the optical fibre subduct connector on a side section of the optical fibre duct.
8. A method as defined in any one of the preceding clauses, further comprising the step of:
   excavating an optical fibre subduct trench between the dwelling and the optical fibre duct.
9. A method as defined in clause 8, further comprising the step of:
   extending the subduct along the subduct trench between the dwelling and the optical fibre duct.
10. A method as defined in clause 9, further comprising the step of:
   reinstating the excavation such that an open end of the subduct is exposed at the dwelling.
11. A method as defined in any one of the preceding clauses, further comprising the step of:
   creating the aperture in the optical fibre duct.
12. A method as defined in any one of the preceding clauses, further comprising the step of:
   rotating the optical fibre subduct connection interface such that a major axis of the first section of the optical fibre subduct connection interface is offset to the major axis of the optical fibre duct.

The skilled person will understand that any combination of features is possible within the scope of the invention, as claimed.

## Claims

1. A method of deploying an optical fibre cable in a telecommunications network, the optical fibre cable being configured to connect a first optical fibre interface unit in the telecommunications network and a second optical fibre interface unit in a dwelling, the method comprising the steps of:
positioning an optical fibre subduct connector on an optical fibre duct so as to align an aperture in the optical fibre subduct connector with an aperture in the optical fibre duct;
connecting an optical fibre subduct with an optical fibre subduct connection interface of the optical fibre subduct connector such that any overlap of the optical fibre subduct and optical fibre subduct connection interface extends up to and not exceeding the aperture of the optical fibre duct, the optical fibre subduct connection interface being configured to resist disconnection of the optical fibre subduct and optical fibre subduct connection interface;
rotating the optical fibre subduct connection interface such that a major axis of the first section of the optical fibre subduct connection interface is offset to the major axis of the optical fibre duct; and
deploying an optical fibre cable between the first optical fibre interface unit in the telecommunications network and the second optical fibre interface unit in the dwelling by routing the optical fibre cable through optical fibre duct, the optical fibre subduct connector, and the optical fibre subduct.

2. A method as claimed in Claim 1, wherein the optical fibre subduct connection interface comprises a first section and a second section and the optical fibre subduct and the optical fibre subduct connection interface are connected such that, once the optical fibre subduct connector is positioned on the optical fibre duct, in the second section, an angle between
a major axis of the optical fibre duct, and
a line extending from
a central point of the aperture of the optical fibre subduct connector, and
a central point of a junction between the first and second sections of the optical fibre subduct connection interface,
is less than 45 degrees.

3. A method as claimed in Claim 2, wherein, in the first section, the optical fibre subduct and optical fibre duct are parallel or substantially parallel.

4. A method as claimed in any one of the preceding claims, wherein the optical fibre subduct is connected with the optical fibre subduct connection interface by one of a group comprising:
inserting the optical fibre subduct into the optical fibre subduct connection interface such that the overlap of the optical fibre subduct and optical fibre subduct connection interface extends up to and not exceeding the aperture of the optical fibre duct;
inserting the optical fibre subduct connection interface into the optical fibre subduct such that the overlap of the optical fibre subduct and optical fibre subduct connection interface extends up to and not exceeding the aperture of the optical fibre duct; and
coupling the optical fibre subduct and optical fibre subduct connection interface such that there is no overlap of the optical fibre subduct and optical fibre subduct connection interface.

5. A method as claimed in any one of the preceding claims, further comprising the step of:
fastening the optical fibre subduct connector with the optical fibre duct.

6. A method as claimed in any one of the preceding claims, further comprising the step of:
conforming an inner surface of the optical fibre subduct connector to an outer surface of the optical fibre duct.

7. A method as claimed in any one of the preceding claims, further comprising the step of:
excavating material surrounding the optical fibre duct to enable positioning of the optical fibre subduct connector on the optical fibre duct.

8. A method as claimed in Claim 7, wherein material is excavated to enable positioning of the optical fibre subduct connector on a top section of the optical fibre duct.

9. A method as claimed in Claim 7, wherein material is excavated to enable positioning of the optical fibre subduct connector on a side section of the optical fibre duct.

10. A method as claimed in any one of the preceding claims, further comprising the step of:
excavating an optical fibre subduct trench between the dwelling and the optical fibre duct.

11. A method as claimed in Claim 10, further comprising the step of:
extending the subduct along the subduct trench between the dwelling and the optical fibre duct.

12. A method as claimed in Claim 11, further comprising the step of:
reinstating the excavation such that an open end of the subduct is exposed at the dwelling.

13. A method as claimed in any one of the preceding claims, further comprising the step of:
creating the aperture in the optical fibre duct.

14. An optical fibre subduct connector for deploying an optical fibre cable in a telecommunications network, the optical fibre subduct connector comprising:
a body defining an aperture for alignment with an aperture of an optical fibre duct when the optical fibre subduct connector is positioned on the optical fibre duct;
an optical fibre subduct connection interface for connecting to an optical fibre subduct such that any overlap of the optical fibre subduct and optical fibre subduct connection interface extends up to and not exceeding the aperture of the optical fibre duct, the optical fibre subduct connection interface being configured to:
resist disconnection of the optical fibre subduct and optical fibre subduct connection interface, and
rotate such that a major axis of the first section of the optical fibre subduct connection interface is offset to the major axis of the optical fibre duct, wherein the optical fibre duct, optical fibre subduct and optical fibre subduct connector provide a route for deploying the optical fibre cable between the first optical fibre interface unit in the telecommunications network and the second optical fibre interface unit in the dwelling.

15. An optical fibre subduct connector as claimed in Claim 14, wherein the optical fibre subduct connection interface comprises a first section and a second section and the optical fibre subduct and the optical fibre subduct connection interface are connected such that, once the optical fibre subduct connector is positioned on the optical fibre duct, in the second section, an angle between
a major axis of the optical fibre duct, and
a line extending from
a central point of the aperture of the optical fibre subduct connector, and
a central point of a junction between the first and second sections of the optical fibre subduct connection interface,
is less than 45 degrees.

16. An optical fibre subduct connector as claimed in Claim 15, wherein, in the first section, the optical fibre subduct and optical fibre duct are parallel or substantially parallel.
